# EUROPEAN PATENT SPECIFICATION

(11) **EP 0 368 257 B1**
(45) Date of publication and mention of the grant of the patent: **13.07.1994**
(21) Application number: 89120628.6
(22) Date of filing: 07.11.1989
(51) Int. Cl.: E05F 15/16, E05B 65/36, B60R 16/02, B60J 7/00

(54) **Vehicle provided with an improved system for controlling the window and sunroof movement**
Fahrzeug mit einer Steuerungseinrichtung für Fenster und Schiebedach
Véhicule équipé d'un dispositif de commande de fenêtre et de toit ouvrant

(30) Priority: 08.11.1988 IT 6799488
(43) Date of publication of application: 16.05.1990
(73) Proprietor: FIAT AUTO S.p.A., 10135 Torino (IT)
(72) Inventor: Darbesio, Luigi, I-10043 Orbassano (IT)
(74) Representative: Boggio, Luigi

(56) References cited:
- EP-A- 0 175 832
- DE-A- 3 514 223
- FR-A- 2 525 271
- GB-A- 1 089 026
- GB-A- 2 199 963
- US-A- 2 621 037

## Description

This invention relates to a vehicle provided with an improved system for controlling the window and sunroof movement, according to the preamble of claim 1. Numerous vehicles are known provided with systems for controlling the movement of the door-installed windows and of the possible sunroof.

The windows and sunroof are generally operated by two different systems which besides increasing overall cost do not totally satisfy the requirements of the driver. For example the driver may wish to automatically raise or lower windows either with the ignition key switched on (and thus presumably with the vehicle in motion) or with the ignition key switched off (and the vehicle ready to be left parked).

In these respects, current systems do not allow the driver's requirements to be totally satisfied. For example, if the ignition key is switched off it is not possible to close the windows, with the result that it is often necessary to reopen the door, switch on the ignition key and operate the closure buttons should the driver not have realised in time that some of the door windows or the sunroof have been left open by mistake.

A vehicle of the type defined in the preamble of claim 1 is disclosed in FR-A-2 525 271, wherein a circuit, actuated through internal switches, controls automatic closure or opening of the driver's window with the key in the on position, otherwise causes automatic closure of all windows. This circuit requires direct action by a person within the vehicle and does not allow control of the window movement from outside or with the key in the off position, except for a short time period after turning off.

Other prior art vehicle are described in GB-A-2 199 963, GB-A-1 089 026 and DE-A-3 514 233, but none of them allows closure of the windows together with door looking with a single action performed from outside, even with the ignition key in the off position and at any time from turning off.

The object of the present invention is to provide a vehicle comprising an system for controlling the window and possible sunroof movement which is simple to use, satisfies the aforesaid operating requirements and is of low cost compared with that of the aforesaid current systems.

Said object is attained according to the present invention by a vehicle having the features claimed in claim 1.

The present invention will be more apparent from the description of a preferred embodiment given hereinafter by way of non-limiting example with reference to the accompanying drawings in which:
Figure 1 is a diagrammatic plan view of a vehicle provided with a system constructed in accordance with the present invention; and
Figures 2, 3 and 4 are flow diagrams of preferred embodiments of a main program for an arithmetic processing unit pertaining to the system of Figure 1.

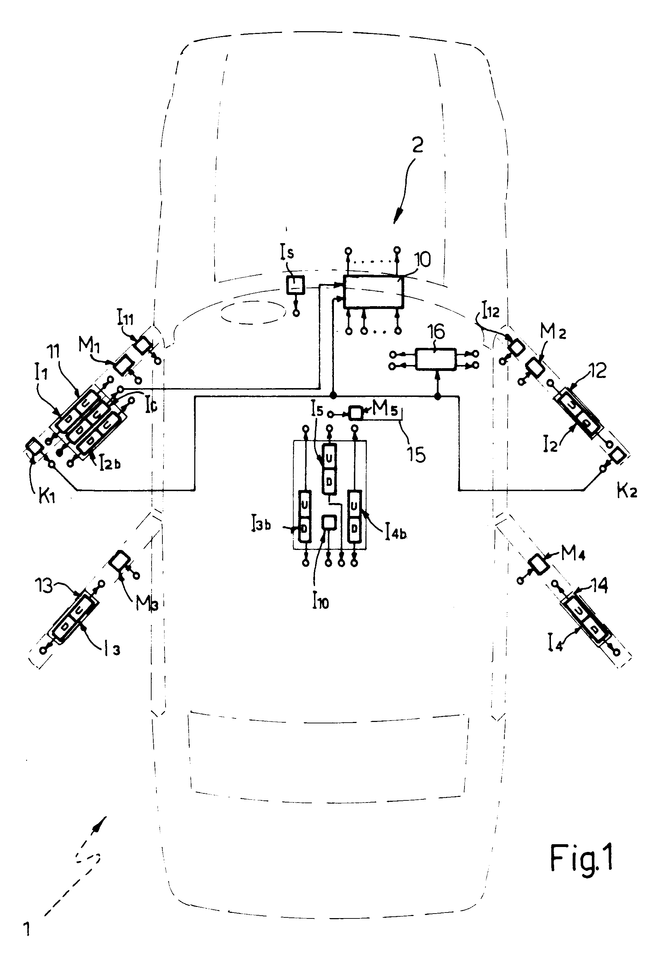

In Figure 1 the reference numeral 1 indicates overall a vehicle provided with a system 2 constructed in accordance with the present invention for controlling the movement of the windows and sunroof (not shown).

The system 2 comprises essentially a plurality of electric motors M1, M2, M3, M4, M5, constituting the operating elements, each of which is installed respectively in a door 11, 12, 13, 14 or in a fixed part of the roof of the vehicle 1, for the purpose of moving the said respective window or sunroof.

The system 2 is also provided with a plurality of switch elements, the reference numerals and positions of which are listed hereinafter.

Specifically, the switches I1, Ic, I2b are carried by the door 11 on the driver's side and have the following respective functions:
I1 - to cause movement of the windows installed in the door 11;
Ic - to cause simultaneous opening or closure of all the windows and the sunroof;
I2b - to cause movement of the window installed in the door 12.

The switches I2, I3, I4 are carried by the doors 12, 13, 14 respectively and cause movement of the windows installed in these doors.

The switches I3b, I4b, I10 are carried in an intermediate position between the two front seats and the switch I5 is conveniently carried on the roof lamp, these respectively performing the following functions:
I3b, I4b - to cause movement of the windows installed in the respective doors 13, 14;
I5 - to cause movement of the sunroof;
I10 - to disenable the operation of the switches I3, I4.

All the aforesaid switches with the exception of I10 are of the type comprising two operating positions and one rest position, to allow the windows and sunroof to be moved towards a raised or closed position (the respective portion to be pressed being indicated by U for each switch), or towards a lowered or open position (the respective portion to be pressed being indicated by D for each switch).

The system 2 is also provided with a control and processing unit 10 to which all the terminals of the said motors and three-position switches and possibly of the switch I10 are connected (in a manner not shown).

In addition to the said terminals, the unit 10 is also connected to a terminal of a switch Is operated by the driver by means of the ignition key of the vehicle 1, and the terminals of two switches I11, I12 installed in the opening occupied by the doors 11 and 12 respectively, to light the passenger compartment lights each time at least one of said front doors is opened.

Finally, the input of the unit 10 is connected to a terminal of a centralized door locking device 16 for the vehicle 1 which receives activation signals from switches K1, K2 installed in the doors 11, 12 respectively in a position accessible from the outside.

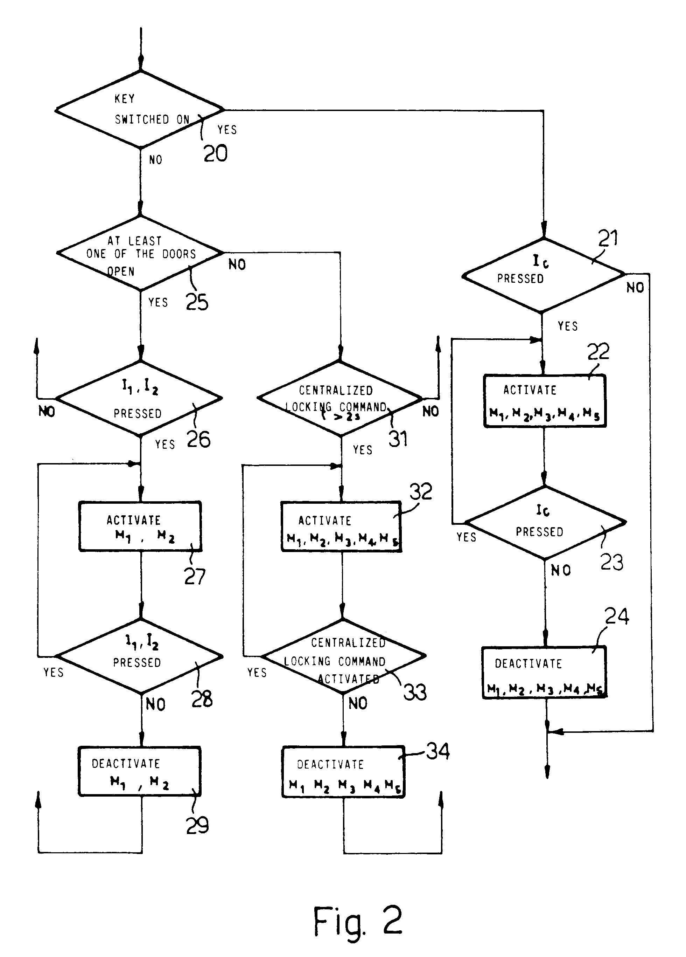

The operation of the system 2 is described hereinafter with particular reference to Figures 2, 3, 4 which as stated represent the flow diagrams of preferred embodiments of a main program for the processing unit 10.

The program commences with a comparison block 20 which checks the state of the switch Is to evaluate whether the ignition key for the vehicle engine is switched on or not.

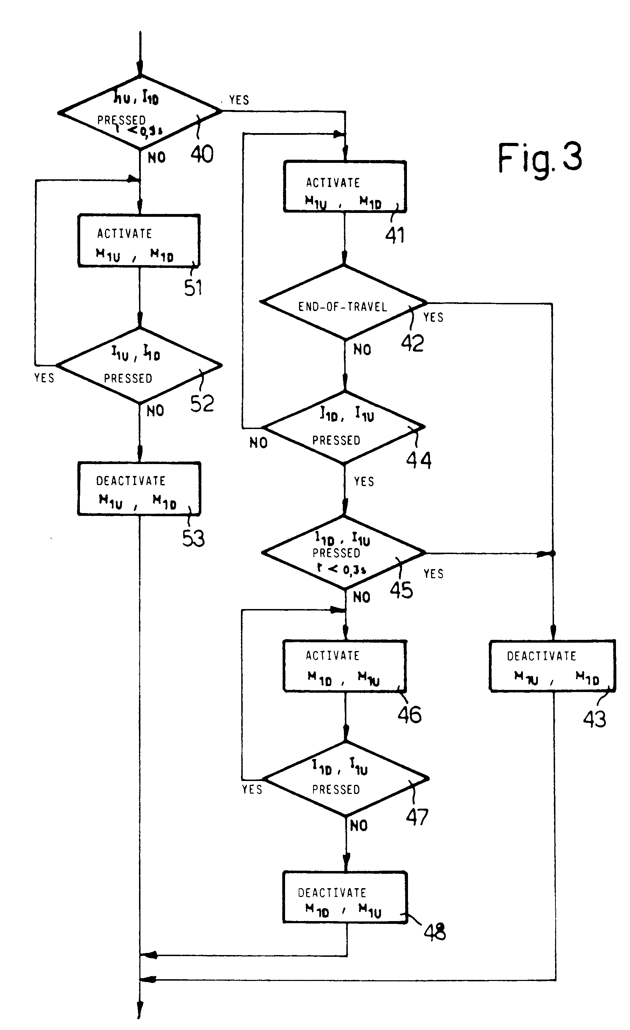

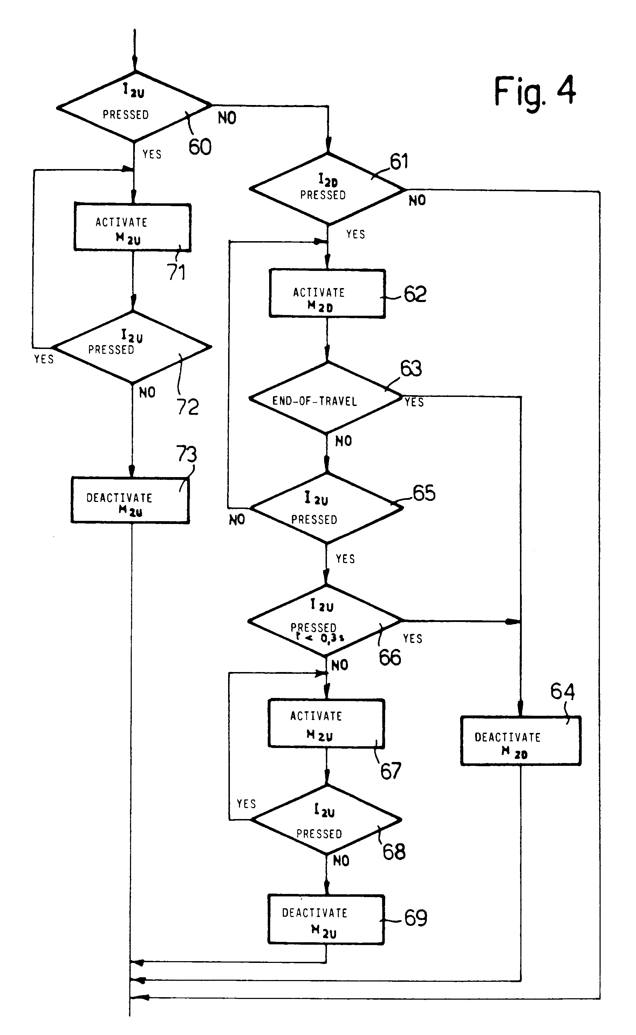

If the result is positive the program passes to a further comparison block 21 which checks the state of the switch Ic. If this switch has not been pressed it passes to subsequent operations described with reference to Figures 3 and 4. If instead the switch Ic has been pressed the program passes to a command block 22 which causes the motors M1, M2, M3, M4, M5 to rotate in one or other direction depending on whether the portion U or the portion D of the switch Ic has been pressed.

Consequently all the windows and the sunroof of the vehicle 1 are simultaneously raised or lowered.

The program then passes to a comparison block 23 which checks whether the switch Ic is still pressed. If the result is positive it returns to the block 22 to keep said motors activated. If negative the program passes to a block 24 which deactivates all the motors to interrupt the raising or lowering of the windows as soon as the driver ceases to press the switch Ic.

Returning to the block 20, if the key has not been switched on the program passes to a comparison block 25 which checks the state of the switches I11, I12 to determine whether at least one of the doors 1, 2 is open.

If the result of this check is positive the program passes to a block 26 which checks whether one or both of the switches I1, I2 have been pressed. If so, the program passes to three blocks 27, 28, 29 which in known manner keep the respective motors (M1, M2) operating while the respective switches (I1, I2) remain pressed, to enable the windows of the doors 1, 2 to be closed or opened as required by the driver.

If both the doors 1, 2 are closed, the program passes from the block 25 to a comparison block 31 which checks the state of the signal from the centralized locking device 16 to measure whether the duration of the command time for this locking exceeds a predetermined time period (for example 2 seconds). If the duration is less than 2 seconds the program returns to the block 20. If the duration exceeds 2 seconds all the motors M1, M2, M3, M4, M5 are activated to simultaneously close all the windows and the sunroof for the entire time period during which the centralized locking command remains active. This is done by the blocks 32, 33, 34, following a procedure of known type analogous to that described with reference to the blocks 27, 28, 29.

With reference to Figure 3, the operation of the motor M1 will now be examined following the command generated by the respective switch I1. I1U indicates that the portion U, of the switch 1A has been pressed, whereas I1D indicates that its portion D has been pressed; likewise M1U indicates that the motor M1 has been enabled to raise the window of the door 11, whereas M1D indicates that it has been enabled to lower this window.

On this basis, a comparison block 40 is reached which checks whether the switch portion I1U or I1D is pressed for a time period t < 0.3s.

If the result is positive, an automatic closure or opening procedure commences for the window of the door 11 and, unless prior action is taken, concludes when the end-of-travel position of the window is reached, on which the motor M1U, M1D is deactivated. This is done by means of the block 41 which activates the motor M1U, M1D, the block 42 which checks whether the end-of-travel position has been reached, the block 43 which deactivates said motor when said end-of-travel position is reached, and the block 44 which checks whether during the movement of the window that switch portion I1D, I1U has been pressed which would cause the window to travel in the other direction to that in which it is currently travelling.

If this latter situation has occurred and in addition the relative switch has been operated for a period of less than 0.3 seconds, the electric motor M1 is immediately deactivated by the block 43, to that the window remains at rest in the position which it has assumed at that instant.

If the switch is operated for a time period exceeding 0.3 seconds, the direction of movement of the window is reversed for the entire time during which the respective portion I1D, I1U of the switch I1 remains pressed. This is done by the blocks 46, 47, 48 in a known manner analogous to that described with reference to the blocks 27, 28, 29 of Figure 2.

Returning now to the block 40 and assuming that the switch I1 is pressed for a time period t > 0.3 seconds, a manual raising or lowering procedure is implemented to cause the window to rise or descend only for the time period for which the respective switch portion (I1U, I1D) is pressed. Again in this case the procedure is implemented by three blocks 51, 52, 53 in the manner described with reference to said blocks 46, 47, 48.

With reference to Figure 4, the behaviour of the motor M2 will now be examined on the basis of the commands generated by the switch I2 in its two possible working positions (I2U, I2D). It should be noted that the behaviour of the motors M3, M4 is substantially identical to the behaviour of the motor M2 except for certain differences which are detailed hereinafter.

A pair of comparison blocks 60, 61 are firstly reached, their purpose being to identify which of the portions (I2U or I2D) of the switch I2 has been pressed.

If neither has been pressed, there is obviously no command required for moving the windows associated with the motor M2, and the program proceeds to carry out the same check on the switches I3, I4.

If it is found that the portion I2D has been pressed, an automatic lowering procedure for the window associated with the motor M2 is implemented which is entirely analogous to that described with reference to Figure 3. Specifically, the blocks 62, 63, 64, 65 of Figure 4 perform the same functions as those described for the blocks 41, 42, 43, 44 of Figure 3.

There is again the facility for interrupting the automatic lowering of the window and, if required, to initiate manual raising as described with reference to Figure 3. In this respect, the blocks 66, 67, 68, 69 of Figure 4 perform the same functions as the blocks 45, 46, 47, 48 of Figure 3 respectively.

Finally, if the switch portion I2U has been pressed, a manual raising procedure for the respective window is initiated, with an operating sequence involving the control of information through the blocks 71, 72, 73, the function performed by these being totally analogous to that of the blocks 51, 52, 53 of Figure 3.

To complete the aforesaid, and with particular reference to the switches I2b, I3b, I4b, it should be noted that if the driver and passenger give opposing commands, the descent command will always prevail.

Moreover, the switches I3b and I4b are always in the enabled state when the ignition key is switched on, even if the switch I10 has been operated, the purpose of this latter being merely to inhibit operation of the switches I3 and I4.

Finally, in a manner not shown, those switches which are able to operate (ie those which have not been disenabled) are lit by an illumination element (such as a light-emitting diode), whether the ignition key has been switched on or not.

The advantages of the present invention are apparent from an examination of its characteristics.

Firstly, the windows and sunroof are operated by a single system, thus simplifying the handling of the commands and reducing overall construction and installation costs. In addition the facility for simultaneously opening or closing from the inside and closing from the outside all the windows and the possible sunroof further enhances the use of the system according to the present invention.

Finally, it is apparent that modifications can be made to the system 2: for example, the command for closing all the closure elements (windows and sunroof) of the vehicle 1 could be provided by a remote control device of known type, provided the concept of operating the remote control device for a time period exceeding a given value is unchanged.

## Claims

1. A vehicle (1) of the type provided with a system (2) comprising a plurality of operating elements (M1-M5), each of which is associated with a respective mobile closure element (sliding window installed in a door and/or sunroof), said system comprising first command means (I1-I4, I2b, Ic) operated by a single action performed inside the vehicle and central control means (10) receiving command signals from said first command means (I1-I4, I2b, Ic), said central control means (10) being able to simultaneously control the movement of all said operating elements (M1-M5),
characterized in that it comprises second command means (K1, K2, 16) operated by a single action performed outside the vehicle and connected to said central control means (10) for feeding a centralized locking signal,
in that said second command means comprises a command unit (16) for controlling centralized locking and switch elements (K1, K2) installed in the front doors of said vehicle and connected to said central control means (10) and to said command unit (16),
said central control means (10) comprising first processing means (31) which compares the duration of operation of said second command means (K1, K2) with a first predetermined time period and automatically activates said operating elements (M1-M5) to close said closure elements when said operation duration exceeds said predetermined time period.

2. A vehicle according to claim 1, characterized in that said first processing means (31) of said control means (10) is activated when the ignition key of said vehicle is switched off and all the doors (11-14) of said vehicle are closed.

3. A vehicle as claimed in claim 1 or 2, characterised in that said first command means (I1-I4, I2b, Ic) operable from the inside comprise a switch element (Ic) provided with two operative portions (IcU, IcD) conveniently installed in said vehicle (1) in a position easily accessible from the driving seat.

4. A vehicle as claimed in claim 3, characterised in that said switch element (Ic) is installed in the door adjacent to said driving seat.

5. A vehicle as claimed in any one of the preceding claims and in which said closure elements consist of the door windows of said vehicle, characterised by comprising a plurality of command elements (I1, I2, I3, I4) for causing the movement of said windows, carried by the respective said doors (11, 12, 13, 14).

6. A vehicle as claimed in claim 5, characterised by comprising a pair of command elements (I3b, I4b) which duplicate the command elements (I3, I4) installed in the rear doors (13, 14) of said vehicle; said pair of command elements (I3b, I4b) being installed in an intermediate position between the front seats of said vehicle.

7. A vehicle as claimed in claim 6, characterised by comprising inhibition means for said command elements (I3, I4) installed in said rear doors (13, 14).

8. A vehicle as claimed in claim 7, characterised in that said inhibition means consist essentially of a switch element (I10) conveniently installed between said front seats of said vehicle.

9. A vehicle according to any of the preceding claims, characterized in that said central control means (10) comprises second processing means (40) for comparing the duration of operation of at least one (I1) of said first command means (I1-I4, I2b, Ic) with a second predetermined time period and
a) automatically open or close said closure elements when the duration of operation of said first command means (I1-I4, I2b, Ic) fails to exceed the second predetermined time period, or
b) open or close said closure elements under manual control if the duration of operation of said first command means (I1-I4, I2b, Ic) exceeds the second predetermined time period.

10. A vehicle according to claim 9, characterized in that said central control means (10) controls said closure elements as they automatically open or close until they reach their end of travel, unless said first command means (I1-I4, I2b, Ic) is actuated to generate an opposite command signal, wherein
a) said closure elements stop movement if the duration of operation of said first command means (I1-I4, I2b, Ic) generating said opposite command signal fails to exceed a third predetermined time period, or
b) said closnre elements reverse direction of movement if the duration of operation of said first command means (I1-I4, I2b, Ic) generating said opposite command signal exceeds the third predetermined time period.

## Patentansprüche

1. Fahrzeug (1) mit einem System (2), welches eine Anzahl von Betätigungselementen (M1 - M5) aufweist, von denen jedes einem betreffenden beweglichen Verschließelement (in einer Tür angebrachtes Schiebefenster und/oder Schiebedach) zugeordnet ist, wobei das System erste Befehlsgebemittel (I1 - I4, I2b, Ic), die durch eine innerhalb des Fahrzeugs durchgeführte einzelne Tätigkeit betätigt werden, und zentrale Steuermittel (10), die Befehlssignale von den ersten Befehlsgebemitteln (I1 - I4, I2b, Ic) erhalten, aufweist, wobei die zentralen Steuermittel (10) in der Lage sind, gleichzeitig die Bewegung aller Betätigungselemente (M1 - M5) zu steuern,
dadurch gekennzeichnet, daß es zweite Befehlsgebomittel (K1, K2, 16) aufweist, die durch eine außerhalb des Fahrzeuges durchgeführte einzelne Tätigkeit betätigt werden und mit den zentralen Steuermitteln (10) zum Zuführen eines zentralisierten Verriegelungssignals verbunden sind, aufweist,
daß die zweiten Befehlsgebemittel eine Befehlsgebeeinheit (16) zur Steuerung der zentralisierten Verriegelung und in den vorderen Türen des Fahrzeuges angebrachte und mit der zentralen Steuereinheit (10) und der Befehlsgebeeinheit (16) verbundene Schalterelemente (K1, K2) aufweisen,
wobei die zentralen Steuermittel (10) erste verarbeitungsmittel (31) aufweisen, welche die Dauer der Betätigung der zweiten Befehlsgebemittel (K1, K2) mit einer ersten bestimmten Zeitdauer vergleichen und automatisch die Betätigungselemente (M1 - M5) für ein Schließen der Verschließelemente aktivieren, wenn die Betätigungsdauer die bestimmte Zeitdauer überschreitet.

2. Fahrzeug nach Anspruch 1, dadurch gekennzeichnet, daß die ersten verarbeitungsmittel (31) der Steuermittel (10) aktiviert werden, wenn der Zündschlüssel des Fahrzeugs abgeschaltet ist und alle Türen (11 - 14) des Fahrzeugs geschlossen sind.

3. Fahrzeug nach Anspruch 1 oder 2, dadurch gekennzeichnet, daß die von der Innenseite betätigbaren ersten Befehlsgebemittel (I1 - I4, I2b, Ic) ein mit zwei Arbeitsabschnitten (IcU, IcD) versehenes Schalterelement (Ic) aufweisen, das in dem Fahrzeug (1) in einer leicht vom Fahrersitz aus zugänglichen Position geeignet angebracht ist.

4. Fahrzeug nach Anspruch 3, dadurch gekennzeichnet, daß das Schalterelement (Ic) in der zum Fahrersitz benachbarten Tür angebracht ist.

5. Fahrzeug nach irgendeinem der vorstehenden Ansprüche, und bei welchem die Verschließelemente aus den Türfenstern des Fahrzeugs bestehen, dadurch gekennzeichnet, daß es eine Anzahl von Befehlsgebeelementen (I1, I2, I3, I4) zur Bewirkung der Bewegung der Fenster aufweist, die von den betreffenden Türen (11, 12, 13, 14) getragen werden.

6. Fahrzeug nach Anspruch 5, dadurch gekennzeichnet, daß es ein Paar von Befehlsgebeelementen (I3b, I4b) aufweist, welche die in den rückwärtigen Türen (13, 14) des Fahrzeugs angebrachten Befehlsgebeelemente (I3, I4) duplizieren, wobei das Paar von Befehlsgebeelementen (I3b, I4b) an einer Stelle zwischen den vorderen Sitzen des Fahrzeugs angebracht ist.

7. Fahrzeug nach Anspruch 6, dadurch gekennzeichnet, daß es Sperrmittel für die in den rückwärtigen Türen (13, 14) angebrachten Befehlsgebeelemente (I3, I4) aufweist.

8. Fahrzeug nach Anspruch 7, dadurch gekennzeichnet, daß die Sperrmittel im wesentlichen aus einem Schalterelement (I10) bestehen, welches geeignet zwischen den Vordersitzen des Fahrzeugs angebracht ist.

9. Fahrzeug nach irgendeinem der vorstehenden Ansprüche, dadurch gekennzeichnet, daß die zentralen Steuermittel (10) zweite Verarbeitungsmittel (40) zum vergleichen der Dauer der Betätigung von wenigstens einem (I1) der Befehlsgebemittel (I1 - I4, I2b, Ic) mit einer zweiten bestimmten Zeitdauer aufweisen und
a) automatisch die Verschließelemente öffnen oder schließen, wenn die Dauer der Betätigung der ersten Befehlsgebemittel (I1 -I4, I2b, Ic) die zweite bestimmte Zeitdauer nicht überschreitet, oder
b) die Verschließelemente unter manueller Steuerung öffnen oder schließen, wenn die Dauer der Betätigung der ersten Befehlsgebemittel (I1 -I4, I2b, Ic) die zweite bestimmte Zeitdauer überschreitet.

10. Fahrzeug nach Anspruch 9, dadurch gekennzeichnet, daß die zentralen Steuermittel (10) die Verschließelemente bei ihrem automatischen Öffnen oder Schließen steuern, bis sie das Ende des Laufs erreichen, es sei denn, die ersten Befehlsgebemittel (I1 - I4, I2b, Ic) werden zur Erzeugung eines entgegengesetzten Befehlssignals betätigt, wobei
a) die Verschließelemente die Bewegung beenden, wenn die Dauer der Betätigung der ersten Befehlsgebemittel (I1 - I4, I2b, Ic), die das entgegengesetzte Befehlssignal erzeugen, eine dritte bestimmte Zeitdauer nicht überschreitet, oder,
b) die Verschließelemente die Bewegungsrichtung umkehren, wenn die Dauer der Betätigung der ersten Befehlsgehemittel (I1 - I4, I2b, Ic), die das entgegengesetzte Befehlssignal erzeugen, die dritte bestimmte Zeitdauer überschreitet.

## Revendications

1. Véhicule (1) du type équipé d'un système (2) comprenant une multiplicité d'éléments opérationnels (M1-M5) dont chacun est associé à un élément de fermeture mobile respectif (vitre coulissante installée dans une portière et/ou toit ouvrant), ce système comprenant des premiers moyens de commande (I1-I4, I2b, Ic) actionnés par une action unique effectuée à l'intérieur du véhicule et des moyens de commande centrale (10) recevant des signaux de commande des premiers moyens de commande (I1-I4, I2b, Ic), ces moyens de commande centrale (10) étant susceptibles de commander simultanément le mouvement de tous les éléments opérationnels (M1-M5),
caractérisé en ce qu'il comprend des deuxièmes moyens de commande (K1, K2, 16) actionnés par une action unique effectuée à l'extérieur du véhicule et reliés à ces moyens de commande centrale (10) pour fournir un signal de verrouillage centralisé,
en ce que les deuxièmes moyens de commande comprennent une unité de commande (16) pour commander le verrouillage centralisé et des éléments d'interrupteurs (K1, K2) installés dans les portières avant du véhicule et reliés à ces moyens de commande centrale (10) et à cette unité de commande (16),
les moyens de commande centrale (10) comprenant des premiers moyens de traitement (31) qui comparent la durée de fonctionnement des deuxièmes moyens de commande (K1, K2) avec une première durée prédéterminée et qui actionnent automatiquement les éléments opérationnels (M1-M5) pour fermer les éléments de fermeture lorsque la durée de fonctionnement dépasse cette durée prédéterminée.

2. Véhicule selon la revendication 1, caractérisé en ce que les premiers moyens de traitement (31) des moyens de commande (10) sont actionnés lorsque la clé de contact du véhicule est en position ARRET et que toutes les portières (11-14) du véhicule sont fermées.

3. Véhicule selon la revendication 1 ou la revendication 2, caractérisé en ce que les premiers moyens de commande (I1-I4, I2b, Ic), pouvant être actionnés de l'intérieur, comprennent un élément d'interrupteur (Ic) ayant deux positions actives (IcU, IcD) monté de façon appropriée dans le véhicule (1) dans une position aisément accessible du siège du conducteur.

4. Véhicule selon la revendication 3, caractérisé en ce que cet élément d'interrupteur (Ic) est installé dans la portière adjacente au siège du conducteur.

5. Véhicule selon l'une des revendications précédentes et dans lequel les éléments de fermeture consistent en les vitres de portières du véhicule, caractérisé en ce qu'il comprend une multiplicité d'éléments de commande (I1, I2, I3, I4) pour provoquer le mouvement de ces vitres, portés par les portières respectives (11, 12, 13, 14).

6. Véhicule selon la revendication 5, caractérisé en ce qu'il comprend deux éléments de commande (I3b, I4b) qui doublent les éléments de commande (I3, I4), installés dans les portières arrière (13, 14) du véhicule, ces deux éléments de commande (I3b, I4b) étant montés dans une position intermédiaire entre les sièges avant du véhicule.

7. Véhicule selon la revendication 6, caractérisé en ce qu'il comprend des moyens d'inhibition de ces éléments de commande (I3, I4) installés dans les portières arrière (13, 14).

8. Véhicule selon la revendication 7, caractérisé en ce que ces moyens d'inhibition consistent essentiellement en un élément d'interrupteur (I10) monté de façon appropriée entre les sièges avant du véhicule.

9. Véhicule selon l'une des revendications précédentes, caractérisé en ce que les moyens de commande centrale (10) comprennent des deuxièmes moyens de traitement (40) pour comparer la durée de fonctionnement d'au moins l'un (I1) de ces premiers moyens de commande (I1-I4, I2b, Ic) avec une deuxième durée prédéterminée et (a) ouvrent ou ferment automatiquement les éléments de fermeture lorsque la durée de fonctionnement des premiers moyens de commande (I1-I4, I2b, Ic) ne dépasse pas la deuxième durée prédéterminée, ou
b) ouvrent ou ferment ces éléments de fermeture sous commande manuelle si la durée de fonctionnement des premiers moyens de commande (I1-I4, I2b, Ic) dépasse la deuxième durée prédéterminée.

10. Véhicule selon la revendication 9, caractérisé en ce que les moyens de commande centrale (10) commandent les éléments de fermeture lorsqu'ils s'ouvrent ou se ferment automatiquement jusqu'à ce qu'ils atteignent leur fin de course, à moins que les premiers moyens de commande (I1-I4, I2b, Ic) soient actionnés pour produire un signal de commande opposé, dans lequel :
a) le mouvement des éléments de fermeture s'arrête si la durée de fonctionnement des premiers moyens de commande (I1-I4, I2b, Ic), produisant ce signal de commande opposé, ne dépasse pas une troisième durée prédéterminée, ou
b) les éléments de fermeture inversent leur direction de mouvement si la durée de fonctionnement des premiers moyens de commande (I1-I4, I2b, Ic), produisant ce signal de commande opposé, dépasse la troisième durée prédéterminée.
